# EUROPEAN PATENT APPLICATION

(11) **EP 1 441 337 A1**
(43) Date of publication of application: **28.07.2004**
(21) Application number: 03001544.0
(22) Date of filing: 23.01.2003
(51) Int. Cl.: G11B 19/00, H04B 1/10, G11B 31/00

(54) **Wireless family entertainment system**

(71) Applicant: Lite-On Technology Corp., Taipei (TW)
(72) Inventor: Tsai, Chris, Hsinchu, Taiwan, R.O.C. (TW)
(74) Representative: Viering, Jentschura & Partner

(57) **Abstract**

A wireless family entertainment system able to make people use the family entertainment equipments and access the network in a wireless manner within a predetermined area comprises a wireless entertainment device and an external transmission module. The wireless entertainment device can communicate with the external transmission module in the wireless manner. And, the wireless entertainment device and external transmission module are connected with the output equipment and the family entertainment equipment, respectively. Therein, the family entertainment equipment can send a data, e.g. audio data, video data, etc. to the output equipment via the wireless entertainment device and external transmission module in the wireless manner so that the user can use the data remotely.

## Description

### FIELD OF THE INVENTION

The present invention is directed to a wireless family entertainment system, and more particularly, to a wireless family entertainment system that can make people to use the family entertainment equipments and access the network in the wireless manner within a predetermined area.

### BACKGROUND OF THE INVENTION

In accordance with the conventional family entertainment equipments, e.g., television, computer or digital video disk player (DVD player), etc., they usually need to use a wire to connect with a signal source or a peripheral equipment so as to perform their functions. For example, the television needs to use a coaxial cable to receive the video signal provided by the cable television company, or use the coaxial cable to connect a DVD player to receive the video signal so as to display a variety of programs or films.

However, the wire usually results in a lot of trouble. For example, if the user would like to use the television disposed in the bedroom to see a movie, he needs to move the DVD player originally disposed in the living room to the bedroom and use the wire to connect the television and DVD player so as to see the movie in the bedroom. After seeing the movie, the user still need disassemble the wire and move the DVD player back. Otherwise, the user needs to dispose an extending wire to connect the television disposed in the bedroom and DVD player disposed in the living room so as to see the movie in the bedroom.

Moreover, while the user would like to access Internet, he needs to use the computer connected with the local area network (LAN). If the user would like to use other computer in his house to access Internet, he needs to move the computer to the place having the network equipment connected with the LAN. Then, the user still needs to move the computer back later. Otherwise, the user needs to dispose an extending wire to connect the computer and the LAN so as to access Internet.

Since the installing of the wire or the moving of the family entertainment equipment is very troublesome and the installed wire or heavy family entertainment equipment doesn't possess mobility, the user thus usually wastes a lot of precious time and cost on it. Furthermore, the installing of the wire usually will ruin the appearance of the house, e.g., the wire needs to be fixed on the wall by using the nails. Besides, while the wires are junked, the disassembling of the wires is also very troublesome and the traces of the nails are hardly to recover.

Accordingly, as discussed above, the prior art still has some drawbacks that could be improved. The present invention aims to resolve the drawbacks in the prior art.

### SUMMARY OF THE INVENTION

The main objective of the present invention is to provide 'a wireless family entertainment system to make people use the family entertainment equipments and access the network in the wireless manner within a predetermined area.

Another objective of the present invention is to remove the limit of the wire so as to increase the convenience and mobility of the family entertainment equipment.

Still another objective of the present invention is to decrease the problem of wiring so as to protect the appearance of the house.

In order to reach the objectives described above, the present invention provides a wireless family entertainment system including: a wireless family entertainment device and external wireless transmission modules. The wireless family entertainment device can communicate with the external wireless transmission modules in a wireless manner so as to transmit control signals, audio or video data, etc.

The wireless family entertainment device comprises a central processing unit (CPU), an output interface and an internal wireless transmission module. Therein, the output interface and internal wireless transmission module are respectively connected with the CPU so as to communicate with the CPU. The output interface is connected with an output equipment. The internal wireless transmission module can communicate with the external wireless transmission module in the wireless manner. Then, the external wireless transmission module is connected with a family entertainment equipment.

The family entertainment equipment can transmit a data stream to the output equipment via the wireless family entertainment device and external wireless transmission module. Therefore, the user can use the family entertainment equipment in the wireless manner within a predetermined area.

Numerous additional features, benefits and details of the present invention are described in the detailed description, which follows.

### BRIEF DESCRIPTION OF THE DRAWINGS

Fig. 1 is a system diagram of the present invention.
Fig. 2 is an internal architecture diagram of the system complied with the present invention.
Fig. 3 is an embodiment of the present invention.
Fig. 4 is another embodiment of the present invention.

### DETAILED DESCRIPTION

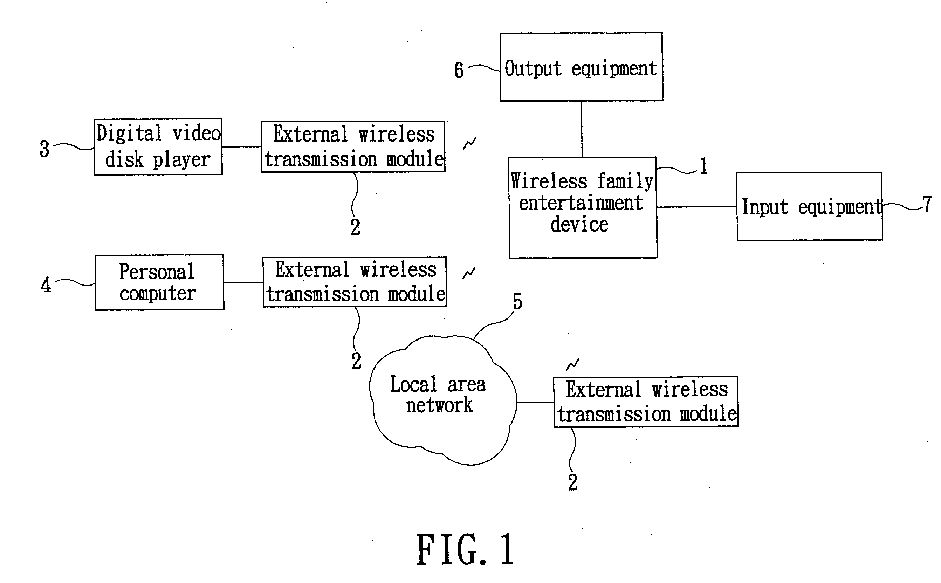

Please refer to Fig. 1. The present invention present provides a wireless family entertainment system including: a wireless family entertainment device 1 and external wireless transmission modules 2. The wireless family entertainment device 1 can communicate with the external wireless transmission modules 2 in a wireless manner so as to transmit control signals, audio or video data, etc.

The wireless family entertainment device 1 can communicate with a plurality of external wireless transmission modules 2 simultaneously. And, the external wireless transmission modules 2 can connect with the family entertainment equipments, e.g., digital video disk player 3 (DVD player), personal computer 4 (PC) and local area network 5 (LAN), etc.

The wireless family entertainment device 1 can be connected with an output equipment 6, e.g. television (TV), computer monitor or speaker, etc. And, wireless family entertainment device 1 also has a variety of application software, e.g. network browsing program, DVD playing program or MP3 playing program, etc. Therefore, the user can user the wireless family entertainment device 1 to access Internet, see a movie or listen the music; etc.

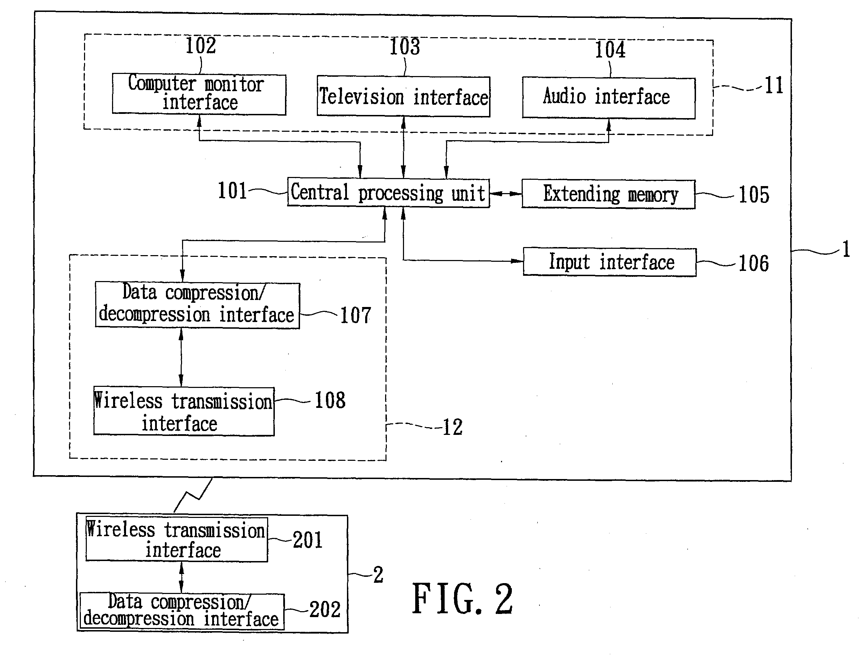

Please refer to Fig. 2. The wireless family entertainment device 1 further comprises a central processing unit 101 (CPU), a output interface 11 (including a computer monitor interface 102, a television interface 103 and an audio interface 104), an extending memory 105, an input interface 106, an internal wireless transmission module 12 (including a data compression/decompression interface 107 and a wireless transmission interface 108).

The CPU 101 is respectively connected and mutually communicates with the computer monitor interface 102, television interface 103, audio interface 104, extending memory 105, input interface 106 and data compression/decompression interface 107. And, the data compression/decompression interface 107 is further connected with the wireless transmission interface 108 so as to communicate with each other.

Therein, the CPU 101 will execute an appropriate program, e.g. network browsing program, DVD playing program or MP3 playing program, etc., according to the inputted control signal or the accessed data type, e.g. audio, video data, etc. And, the programs are stored in the extending memory 105.

On the other hand, the external wireless transmission module 2 further comprises a wireless transmission interface 201 and a data compression/decompression interface 202. The wireless transmission interface 201 and a data compression/decompression interface 202 are electrically connected so as to communicate with each other.

In accordance with the present invention, the wireless family entertainment device 1 can use the wireless transmission interface 108 to simultaneously communicate with a plurality of wireless transmission interfaces 201 of the external wireless transmission modules 2 so as to transmit control signals, audio or video data, etc. In practice, the wireless transmission interface 108 and wireless transmission interfaces 201 can use the IEEE 802.11b, 802.3 or bluetooth protocol to communicate with each other.

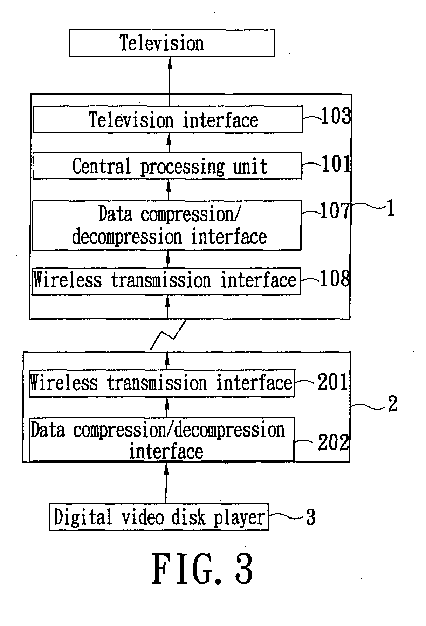

Please refer to Fig. 3, which is an embodiment of the present invention (some unused portions are omitted). In this embodiment, the television interface 103 of the wireless family entertainment device 1 is connected with a television and the external wireless transmission module 2 is connected with a DVD player 3.

Initially, after the DVD player 3 is turned on, it will send out a video data read from a digital video disk (DVD). Then, the data compression/decompression interface 202 will compress the video data so as to transmit the video data to the wireless family entertainment device 1 via the wireless transmission interface 201.

After received by the wireless transmission interface 108 of the wireless family entertainment device 1, the video data will be decompressed by the data compression/decompression interface 107 so as to recover the video data. Then, the video data will be delivered to the CPU 101 and the CPU 101 will display the video data via the television 103 and the television. In practice, the CPU 101 can execute a DVD playing program to display the video data.

In accordance with the present invention, by using the data compression/decompression interface 107 and 202, the amount of transmitted data will be reduced so that the bandwidth of the wireless channel will be used more efficiently.

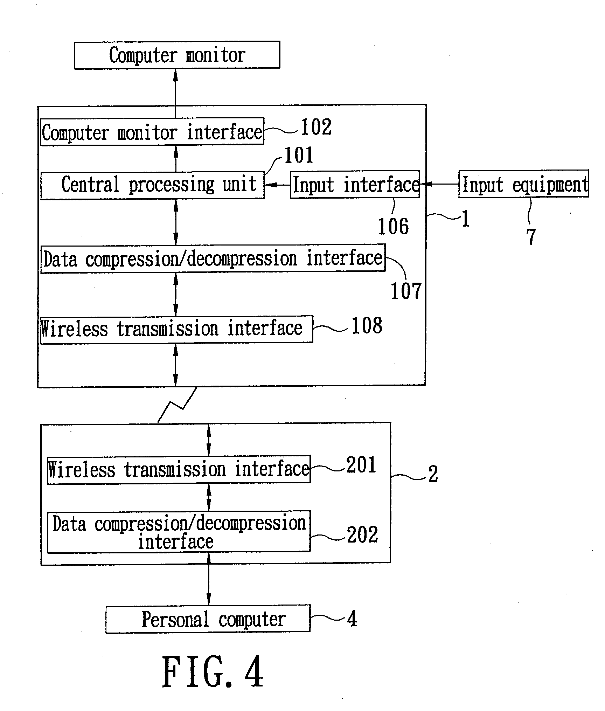

Please refer to Fig. 4, which is another embodiment of the present invention (some unused portions are omitted). Therein, in this embodiment, the computer monitor interface 102 of the wireless family entertainment device 1 is connected with a computer monitor and the data compression/decompression interface 202 of the external wireless transmission module 2 is connected with the personal computer 4. Besides, the input interface 106 is connected with the input equipment 7, e.g. keyboard or/and mouse.

Initially, after the personal computer 4 is turned on, it will send a screen data to the external wireless transmission module 2. Then, the external wireless transmission module 2 will send the screen data to the computer monitor via the wireless channel and the wireless family entertainment device 1 so as to display the screen data on the computer monitor.

Therein, after the screen data is received by the external wireless transmission module 2, the external wireless transmission module 2 will first compress the screen data via the data compression/decompression interface 202. Then, the compressed screen data will be sent to the wireless channel by the wireless transmission interface 201.

After the wireless transmission interface 108 receives the compressed screens data, the wireless family entertainment device 1 will decompress the compressed screen data via the data compression/decompression interface 107 and then send to the CPU 101.

When the CPU 101 receives the screen data, the CPU 101 will determine to send the screen data to the computer monitor interface 102 according the data type of the screen data and then display the screen data on the computer monitor. In practice, the CPU 101 will determine to send the received data to an appropriate interface according the data type of the received data.

After the screen data is displayed on the computer monitor, the user can input a control signal via the input equipment 7 according to the screen data shown on the screen of the computer monitor. Then, the control signal will be sent to the personal computer 4 via the wireless family entertainment device 1 and the external wireless transmission module 2 so as to control the personal computer 4.

First, the control signal will be sent to the input interface 106 and then to the CPU 101. Then, the CPU 101 will determine that the control signal is a computer control signal and then compress and transmit the control signal onto the wireless channel via the data compression/decompression interface 107 and the wireless transmission interface 108.

When the wireless transmission interface 201 of the external transmission module 2 receives the control signal, the control signal then will be delivered to and decompressed by the data compression/decompression interface 202. Then, the decompressed control data will be sent to the personal computer 4 so as to control the operation of the personal computer 4.

Accordingly, in accordance with the present invention, the user can control or use the personal computer 4 in the wireless manner by the wireless family entertainment device 1 and the external wireless transmission module 2. Therefore, the user can use the personal computer 4 without the limit of wiring.

Furthermore, please refer to Fig. 4. The personal computer 4 can be replaced by the local area network 5. After the wireless family entertainment device 1 receives digital data accessed from the local area network 5 via the external wireless transmission module 2, the CPU 101 will execute the network browsing program and display a predetermined home page on the screen of the computer monitor. The user can use the input equipment, i.e. keyboard and/or mouse, to surf the predetermined home page or connect with other web sites.

Summing up, the present invention has following features and advantages:
(1) The present invention provides a wireless family entertainment system so as to make the user able to use the family entertainment equipment or access the network in the wireless manner.
(2) The present invention resolves the wiring limit of the prior art family entertainment equipment so as to increase the convenience.
(3) The present invention can reduce the problems of wiring so that the appearance of the house can be protected.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are embraced within the scope of the invention as defined in the appended claims.

## Claims

1. A wireless family entertainment system comprising:
a wireless family entertainment device having an first transmission interface; and
an external wireless transmission module having a second transmission interface so as to communicate with the first transmission interface via a wireless channel;
wherein the external wireless transmission module is connected with a family entertainment equipment and the wireless family entertainment device is connected with a output equipment; the family entertainment equipment delivers data to the output equipment via the wireless family entertainment device and the external wireless transmission module; thereby, the family entertainment equipment is used in a predetermined area in a wireless manner.

2. The wireless family entertainment system as claimed in claim 1, wherein the wireless family entertainment system further comprises a central processing unit (CPU), the CPU executes a corresponding program according a data type of the data so as to make the data adapt to play or display on the output equipment.

3. The wireless family entertainment system as claimed in claim 1, wherein the wireless family entertainment device has an input interface for connecting an input equipment.

4. The wireless family entertainment system as claimed in claim 3, wherein the input equipment is a keyboard and/or a mouse, thereby, a control signal is inputted via the input equipment so as to control the family entertainment equipment.

5. The wireless family entertainment system as claimed in claim 1, wherein the wireless family entertainment system further comprises a computer monitor interface and the output equipment is a computer monitor, the computer monitor is connected with the computer monitor interface so as to receive the data.

6. The wireless family entertainment system as claimed in claim 5 wherein the family entertainment equipment is a personal computer.

7. The wireless family entertainment system as claimed in claim 5 wherein the family entertainment equipment is a local area network.

8. The wireless family entertainment system as claimed in claim 1 wherein the wireless family entertainment device further comprises a television interface and the output equipment is a television, the television is connected with the television interface so as to receive the data.

9. The wireless family entertainment system as claimed in claim 8 wherein the family entertainment equipment is a digital video disk player (DVD player).

10. The wireless family entertainment system as claimed in claim 1 wherein the wireless family entertainment device has an extending memory for storing an application program.

11. The wireless family entertainment system as claimed in claim 10 wherein the application program is a network browsing program.

12. The wireless family entertainment system as claimed in claim 10 wherein the application program is a DVD (digital video disk) playing program.

13. The wireless family entertainment system as claimed in claim 10 wherein the application program is a MP3 playing program.

14. The wireless family entertainment system as claimed in claim 1 wherein the wireless family entertainment device further comprises a data compression/decompression interface for compressing outputting data or decompressing the data delivered from the family entertainment equipment.

15. The wireless family entertainment system as claimed in claim 1 wherein the external wireless transmission module further comprises a data compression/decompression interface for compressing the data delivered from the family entertainment equipment or decompressing an inputting delivered from the second transmission interface.

16. A wireless family entertainment device comprising:
a central processing unit (CPU);
an output interface; and
an internal wireless transmission module;
wherein the output interface and the internal wireless transmission module are connected with the central processing unit so as to communicate with the central processing unit, the output interface is connected with a output equipment, the internal wireless transmission module communicates with an external wireless transmission module in a wireless manner and the external wireless transmission module is connected with a family entertainment equipment, the family entertainment equipment transmits a data to the output equipment via the wireless family entertainment device and the external wireless transmission module; thereby, the family entertainment equipment is used in a predetermined area in a wireless manner.

17. The wireless family entertainment device as claimed in claim 16 wherein the internal wireless transmission module further comprises a first transmission interface so as to receive or transmit a signal.

18. The wireless family entertainment device as claimed in claim 16 wherein the internal wireless transmission module further comprises a first data compression/decompression interface for compressing outputting data delivered from the central processing unit or decompressing the data delivered from the family entertainment equipment.

19. The wireless family entertainment device as claimed in claim 16 wherein the external wireless transmission module further comprises a second transmission interface so as to receive or transmit a signal.

20. The wireless family entertainment device as claimed in claim 19 wherein the external wireless transmission module further comprises a second data compression/decompression interface for compressing the data delivered from the family entertainment equipment or decompressing inputting data delivered from the internal wireless transmission module.

21. The wireless family entertainment device as claimed in claim 16 wherein the CPU executes a corresponding program according a data type of the data so as to make the data adapt to play or display on the output equipment.

22. The wireless family entertainment device as claimed in claim 16 wherein the wireless family entertainment device has an input interface for connecting an input equipment.

23. The wireless family entertainment device as claimed in claim 22, wherein the input equipment is a keyboard and/or a mouse, thereby, a control signal is inputted via the input equipment so as to control the family entertainment equipment.

24. The wireless family entertainment device as claimed in claim 23, wherein the wireless family entertainment system further comprises a computer monitor interface and the output equipment is a computer monitor, the computer monitor is connected with the computer monitor interface so as to receive the data.

25. The wireless family entertainment device as claimed in claim 24 wherein the family entertainment equipment is a personal computer.

26. The wireless family entertainment device as claimed in claim 24 wherein the family entertainment equipment is a local area network.

27. The wireless family entertainment device as claimed in claim 16 wherein the output interface further comprises a television interface and the output equipment is a television, the television is connected with the television interface so as to receive the data.

28. The wireless family entertainment device as claimed in claim 17 wherein the family entertainment equipment is a digital video disk player (DVD player).

29. The wireless family entertainment device as claimed in claim 16 wherein the wireless family entertainment device has an extending memory for storing an application program.

30. The wireless family entertainment device as claimed in claim 29 wherein the application program is a network browsing program.

31. The wireless family entertainment device as claimed in claim 29 wherein the application program is a DVD (digital video disk) playing program.

32. The wireless family entertainment device as claimed in claim 29 wherein the application program is a MP3 playing program.
